# EUROPEAN PATENT SPECIFICATION

(11) **EP 1 865 583 B1**
(45) Date of publication and mention of the grant of the patent: **11.01.2012**
(21) Application number: 07075376.9
(22) Date of filing: 16.05.2007
(51) Int. Cl.: H02G 3/12

(54) **Installation box**
Installationsdose
Boîtier d'installation

(30) Priority: 17.05.2006 NL 1031831
(43) Date of publication of application: 12.12.2007
(73) Proprietor: ABB B.V., 6716 AA Ede (NL)
(72) Inventor: Renckens, Thomas Philippus, 3742 ND Baarn (NL)
(74) Representative: De Hoop, Eric

(56) References cited:
- DE-U1- 8 711 217
- DE-U1- 29 519 010
- NL-C2- 1 019 049

## Description

### BACKGROUND OF THE INVENTION

The invention relates to an installation box to be placed in a hole in a wall of a building. An installation box according to the preamble of claim 1 is known from DE 8 711 217 U1.

Such boxes form a part of the electric wiring of the building, in which switch material is attached onto the box and junctions are included between the cables in the box. During the installation a blind hole is drilled in the wall, after which the box is put into the hole subsequently to be secured for instance by plaster.

A known box comprises several spring lips all around its outside with which the box can be held in the hole before and during applying the plaster. The spring lips centre the box in the hole. Centring may be undesirable when the hole has not been drilled exactly at the correct place. Particularly in case of a series of adjacently drilled holes for the same number of coupled boxes this may be disadvantageous, because as a result a row of switches may acquire an inclined position. During hardening of the plaster the boxes have to be kept in the correct position using force or using hard filling materials. The presence of a spring lip may furthermore unnecessarily hamper a correction in a certain direction.

It is an object of the invention to provide an installation box of the above-mentioned type that is adjustable in a hole within a wider range.

It is an object of the invention to provide an installation box of the above-mentioned type that can easily be positioned in the desired position in a hole.

### SUMMARY OF THE INVENTION

The invention provides an installation box according to claim 1.

The break connection makes it possible to remove the placement protrusion in a controlled manner from the circumferential wall when this is necessary, for instance when the placement protrusion inadvertently hampers a correct positioning with respect to the hole. The placement protrusion may act as a lever for increasing the break-off forces on the break connection.

The placement protrusion is able to engage over a large range onto the bounding wall when the placement protrusion extends along the circumferential wall transverse to the plane of the installation opening.

A larger moment can be exerted onto the break connection for breaking off the connection, when from the break connection the placement protrusion extends freely from the circumferential wall. The break connection can then be broken off by for instance pulling the free part. A rupture of the break connection may start at the break connection side that is closest to the free end.

Engagement between the free part and the circumferential wall may in that case be particularly facilitated when in a direction away from the break connection the free distance between the placement protrusion and the circumferential wall preferably increases.

Alternatively, or in other words, the placement protrusion is elongated, wherein in a longitudinal direction of the placement protrusion the length of the break connection is shorter than the length of the placement protrusion.

The placement protrusion can be pre-biassed against the bounding wall to keep the installation box in the hole when the placement protrusion forms a spring lip of which a free end is movable in a direction transverse to the plane of the circumferential wall.

With respect to the placement protrusion the break connection preferably is situated at the side of the installation opening.

When the placement protrusion comprises a placement edge facing away from the circumferential wall for abutment against the bounding wall, wherein the placement edge changes at an angle into an anchoring edge offset from the circumferential wall, the edges may form a barbed section at the level of the angle in which way the installation box can be kept in the hole more reliably.

The placement edge preferably changes at an acute angle into the anchoring edge.

With the anchoring edge, the placement protrusion may engage behind irregularities of the bounding wall when a locking surface of the anchoring edge faces the installation opening.

The anchoring edge may be connected relatively rigid to the circumferential wall via the break connection when in a longitudinal direction of the placement protrusion, the anchoring edge is situated at the side of the break connection, preferably at the level of an end edge of the break connection which edge faces away from the installation opening.

The placement protrusion itself is able to slightly bend outwards from and towards the bounding wall when the placement protrusion is inclined with respect to the contact surface of the circumferential wall at the location of the break connection.

In a simple embodiment the placement protrusion comprises a placement flap extending transverse to the plane of the installation opening.

The installation box, with little hindrance from the placement protrusion, can be inserted in the hole and if necessary be pre-biassed to the circumferential wall when at an insertion end the placement protrusion comprises a run-on edge having an inclined position with respect to the circumferential wall and the bottom.

The installation box can be centred with respect to the hole when the installation box comprises several placement protrusions preferably evenly placed around the circumferential wall.

The placement protrusions can be broken off several at a time when the placement protrusions are connected to a break connection in pairs.

The positioning behaviour of several placement protrusions may be comparable in opposite directions when in opposite directions the placement protrusions are inclined to the contact surface of the circumferential wall at the location of the break connection.

Preferably the placement protrusions within a pair stand apart from each other, so that they do not hinder each other when pushing them in in the direction of the circumferential wall.

Preferably a pair of placement protrusions connected to the break connection together with the break connection have a Y-shaped cross-section.

The placement protrusions may form the outermost engaging members of the installation box when the installation box comprises a curved round-going circumferential wall, preferably circular, wherein the placement protrusions have side edges that face away from the circumferential wall and which when the box is not placed define a largest circumscribed circle of the installation box.

Preferably the installation box, and thus the placement protrusion and the break connection, are manufactured of synthetic material, preferably injection mouldable synthetic material.

The aspects and measures described in this description and claims of the application and/or shown in the drawings of this application may where possible also be used individually. Said individual aspects, such as the shape and the position of the barbed section and other aspects, may be the subject of divisional patent applications relating thereto. This particularly applies to measures and aspects that have been described per se in the sub claims.

### SHORT DESCRIPTION OF THE DRAWINGS

The invention will be elucidated on the basis of a number of exemplary embodiments shown in the attached drawings, in which:
Figure 1 shows a view in perspective of an installation box according to the invention;
Figure 2 shows a top view of the installation box according to figure 1; and

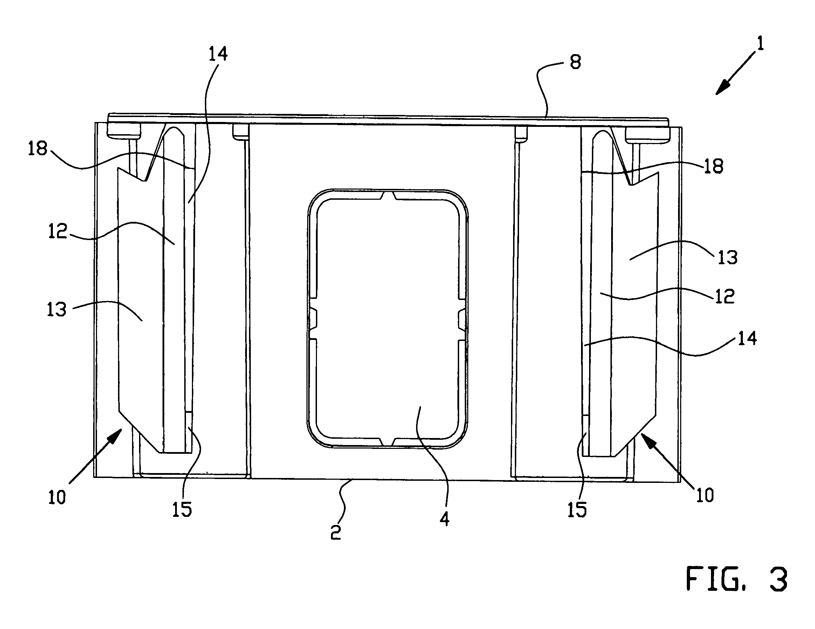

Figure 3 shows a side view of the installation box according to figure 1.

### DETAILED DESCRIPTION OF THE DRAWINGS

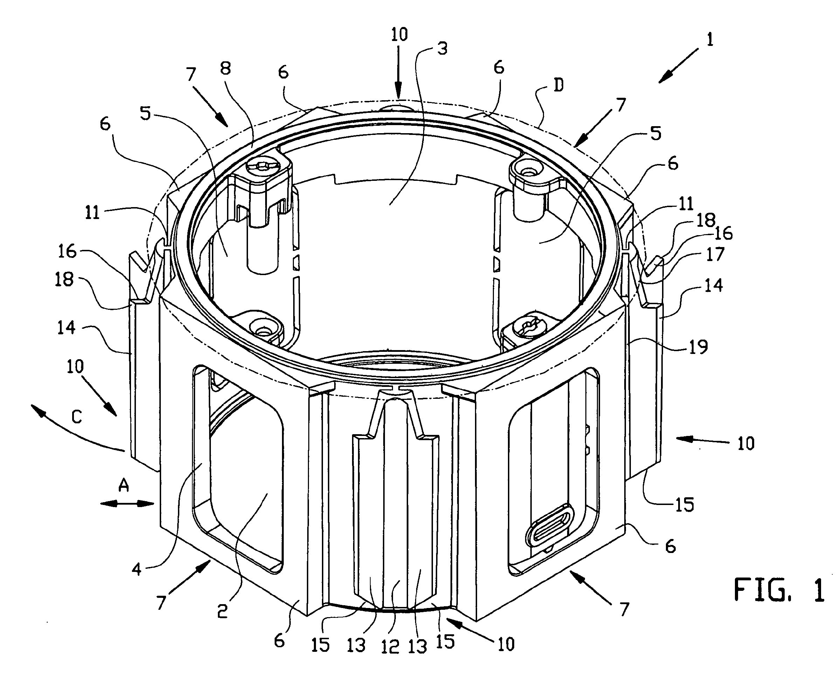

The installation box 1 according to figure 1 comprises a bottom wall 2, a circumferential wall 3 having an installation edge 8 for building up switch material, passage openings 4 for lines in the circumferential wall 3, and a few break-through gates 5 for keeping said passage openings 4 closed. All around the outside of the circumferential wall 3, the installation box 1 comprises four couplings 7, with along the longitudinal sides 6 attachment rails (not shown) for coupling the installation box to a next installation box, and four in this example, identical, elongated placement protrusions or attachment protrusions 10 between the couplings 7 for securing the installation box 1 in a hole (not shown) in for instance a brick wall. The attachment protrusions are connected to the circumferential wall 3 by means of a break partition or break section 11.

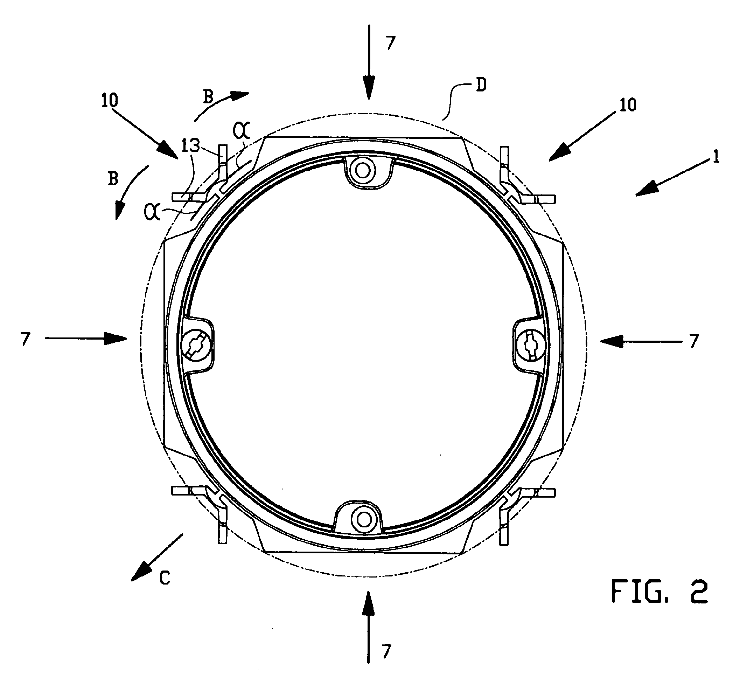

The attachment protrusions 10 each comprise an elongated base part 12 having at the longitudinal sides two elongated placement flaps or bending flaps 1 3 projecting inclined from the base part 1 2 and oriented away from each other. As shown in figure 2 the bending flaps are at an angle α of approximately 45 degrees to the tangent of the circumferential wall 3 at the location of the break section 11. In top view the bending flaps 13 and the break section 11 form a Y-arrangement.

The bending flaps 13 comprise a straight abutment edge 14 facing away from the outside of the circumferential wall 3, which edge extends substantially transverse to the plane of the installation edge 8 along the circumferential wall 3. The abutment edges 14 of the attachment protrusions 10 project from a circumscribed circle D of the longitudinal sides 6 of the couplings 1. At the bottom side, each abutment edge 14 changes into an inclined insertion edge 15 facing the bottom 2, and at the opposite side the abutment edge 14 according to an acute pointed angle 18 changes into an anchoring edge 16 of which the plane substantially faces the installation edge 8. The anchoring edge 16 changes into finishing edge 17 that slopes down inclined towards the installation edge 8.

The break sections 11 have a width that is smaller than the thickness of the bending flaps 13. The break sections, considered in sideward projection, extend in longitudinal direction from the installation ring 8 to the pointed angles 18. From the break section 11, each attachment protrusion 10 leaves a space or slit 19 free with respect to the circumferential wall 3. The distance between the circumferential wall 3 and the base part 12 increases in width in the direction towards the bottom 2. Due to the elasticity of the synthetic material the attachment protrusion 10 may bend from the section 11 in the direction A from and towards the circumferential wall 3, and the bending flaps 13 with the abutment edges 14 can be bend flat in direction B towards the circumferential wall 3. The attachment protrusions 10 can be broken off from the circumferential wall 3, by manually pulling them in direction C from the circumferential wall 3, as a result of which break section 11 ruptures over its full length. The elongated attachment protrusions 10 are then active as a lever for facilitating the rupture of the break section 11.

When building in the installation box 1 in for instance a rough lime-sandstone wall, a blind hole is drilled into the wall, the diameter of which hole is a few millimetres larger than the circumscribed circle D of the couplings 7 of installation box 1. During placement of the installation box 1 the attachment protrusions 10 are pre-biassed towards the circumferential wall 3 by the insertion edges 15, after which the abutment edges 14 scrape along the circumferential wall of the hole. The pointed angles 18 together with the anchoring edges 16 then form barbs counteracting that the installation box 1 moves back out of the hole. The attachment protrusions 10 then centre the installation box 1 with respect to the hole.

When it turns out to be necessary to give the installation box 1 an eccentric position with respect to the hole, for instance because a series of holes for a series of coupled installation boxes 1 are not situated according to a straight line, one or several of the attachment protrusions 10 can be broken off, for instance two consecutive attachment protrusions 10, in order to give the installation box 1 more adjustment space in that direction. The opposite attachment protrusions 10 may also in this situation get into stopping contact with the circumferential wall of the hole as a result of a position that is less compressed.

## Claims

1. Installation (1) box to be placed in a hole in a wall of a building, comprising a bottom wall (2), a circumferential wall (3) an edge (8) of which bounding an installation opening, and a placement protrusion (10) at the outside of the circumferential wall for engagement onto a bounding wall of the hole, **characterised in that** the placement protrusion (10) forms a unity with the circumferential wall (3) via a break connection (11) which is situated at one end of the placement protrusion (10) that is adjacent to the circumferential wall (3).

2. Installation box (1) according to claim 1, wherein the placement protrusion (10) extends along the circumferential wall (3) transverse to the plane of the installation opening.

3. Installation box (1) according to claim 1 or 2, wherein from the break connection (11) the placement protrusion (10) extends freely from the circumferential wall (3), wherein in a direction away from the break connection (11) the free distance between the placement protrusion (10) and the circumferential wall (3) preferably increases.

4. Installation box (1) according to any one of the preceding claims, wherein the placement protrusion (10) is elongated, wherein in a longitudinal direction of the placement protrusion the length of the break connection (11) is shorter than the length of the placement protrusion (10).

5. Installation box (1) according to any one of the preceding claims, wherein with respect to placement protrusion (10) the break connection (11) is situated at the side of the installation opening.

6. Installation box (1) according to any one of the preceding claims, wherein the placement protrusion (10) forms a spring lip of which a free end is movable in a direction transverse to the plane of the circumferential wall (3).

7. Installation box (1) according to any one of the preceding claims, wherein the placement protrusion (10) comprises a placement edge (14) facing away from the circumferential wall (3) for abutment against the bounding wall, wherein the placement edge (14) changes at an angle into an anchoring edge (16) offset from the circumferential wall (3), wherein the placement edge (14) preferably changes at an acute angle (18) into the anchoring edge (16), and/or wherein a locking surface of the anchoring edge (16) preferably faces the installation opening, and/or wherein in a longitudinal direction of the placement protrusion (10), the anchoring edge (16) preferably is situated at the side of the break connection (11), preferably at the level of an end edge of the break connection (11) which edge faces away from the installation opening.

8. Installation box (1) according to any one of the preceding claims, wherein the placement protrusion (10) is inclined with respect to the contact surface of the circumferential wall (3) at the location of the break connection (11).

9. Installation box (1) according to any one of the preceding claims, wherein the placement protrusion (10) comprises a placement flap (13) extending transverse to the plane of the installation opening.

10. Installation box (1) according to any one of the preceding claims, wherein (at) an insertion end the placement protrusion (10) emprises a run-on edge (15) facing away from the circumferential wall (3), the run-on edge (15) having an inclined position with respect to the bottom wall (2) and the circumferential wall (3).

11. Installation box (1) according to any one of the preceding claims, comprising several placement protrusions (10,13) preferably evenly placed around the circumferential wall (3), wherein the placement protrusions (10,13) preferably are connected to a break connection (11) in pairs, and/or wherein in opposite directions the placement protrusions (10, 13) preferably are inclined to the contact surface of the circumferential wall (3) at the location of the break connection (11), wherein the placement protrusions (13) within a pair preferably stand apart from each other.

12. Installation box (1) according to claim 11, wherein a pair of placement protrusions (13) connected to the break connection substantially have a V-shaped cross-section, and/or wherein a pair of placement protrusions (13) connected to the break connection (11) together with the break connection (11) have a substentially Y-shaped cross-section.

13. Installation box (1) according to claim 11 or 12, comprising a curved round-going circumferential wall (3), preferably circular, wherein the placement protrusions (10,13) have side edges (14) that face away from the circumferential wall (3) and which when the box (1) is not placed define a largest circumscribed circle of the installation box (1).

## Patentansprüche

1. Installationsdose (1), die in einer Aussparung in einer Wand eines Gebäudes platziert werden soll, mit einer Bodenwand (2), einer Umfangsrand (3), von der ein Rand (8) auf eine Installationsöffnung aufprallt, und einem Platzierungsvorsprung (10) an der Außenseite der Umfangsrand zum Eingriff mit einer Aufprallwand der Aussparung, **dadurch gekennzeichnet, dass** der Platzierungsvorsprung (10) eine Einheit mit der Umfangsrand (3) mittels einer Brechverbindung (11) bildet, die an einem Ende des Platzierungsvorsprungs (10) angeordnet ist, das an die Umfangsrand (3) angrenzt.

2. Installationsdose (1) nach Anspruch 1, bei der sich der Platzierungsvorsprung (10) entlang der Umfangsrand (3) erstreckt, die transversal zu der Ebene der Installationsöffnung ist.

3. Installationsdose (1) nach Anspruch 1 oder 2, bei der sich der Platzierungsvorsprung (10) von der Brechverbindung (11) frei von der Umfangsrand (3) erstreckt, wobei in einer Richtung weg von der Brechverbindung (11) der freie Abstand zwischen dem Platzierungsvorsprung (10) und der Umfangsrand (3) vorzugszueise zunimmt.

4. Installationsdose (1) nach einem der vorhergehenden Ansprüche, bei welcher der Platzierungsvorsprung (10) verlängert ist, wobei die Länge der Brechverbindung (11) in einer Längsrichtung des Platzierungsvorsprungs kürzer als die Länge des Platzierungsvorsprungs (10) ist.

5. Installationsdose (1) nach einem der vorhergehenden Ansprüche, bei der die Brechverbindung (11) bezüglich des Platzierungsvorsprungs (10) an der Seite der Installationsöffnung angeordnet ist.

6. Installationsdose (1) nach einem der vorhergehenden Ansprüche, bei welcher der Platzierungsvorsprung (10) eine Federlippe bildet, von der ein freies Ende in eine Richtung transversal zu der Ebene der Umfangswand (3) bewegbar ist.

7. Installationsdose (1) nach einem der vorhergehenden Ansprüche, bei welcher der Platzierungsvorsprung (10) einen Platzierungsrand (14) aufweist, der weg von der Umfangswand (3) zum Anstoßen gegen die Aufprallwand zeigt, wobei sich der Platzierungsrand (14) bei einem Winkel in einen Ankerrand (16) ändert, der abgesetzt von der Umfangswand (3) ist, wobei sich der Platzierungsrand (14) vorzugweise bei einem spitzen Winkel (18) in den Ankerrand (16) ändert und/oder wobei eine Arretierungsoberfläche des Ankerrands (16) vorzugsweise zur Installationsöffnung zeigt und/oder wobei in einer Längsrichtung des Platzierungsvorsprungs (10) der Ankerrand (16) vorzugsweise an der Seite der Brechverbindung (11) angeordnet ist, vorzugsweise auf dem Niveau eines Endrands der Brechverbindung (11), wobei der Rand weg von der Installationsöffnung zeigt.

8. Installationsdose (1) nach einem der vorhergehenden Ansprüche, bei welcher der Platzierungsvorsprung (10) bezüglich der Kontaktoberfläche der Umfangswand (3) an einer Position der Brechverbindung (11) geneigt ist.

9. Installationsdose (1) nach einem der vorhergehenden Ansprüche, bei welcher der Platzierungsvorsprung (10) eine Platzierungslasche (13) aufweist, die sich transversal zu der Ebene der Installationsöffnung erstreckt.

10. Installationsdose (1) nach einem der vorhergehenden Ansprüche, bei welcher der Platzierungsvorsprung (10) an einem Einsetzende einen Einlaufrand (15) aufweist, der weg von der Umfangswand (3) zeigt, wobei der Einlaufrand (15) eine geneigte Position bezüglich der Bodenwand (2) und der Umfangswand (5) aufweist.

11. Installationsdose (1) nach einem der vorhergehenden Ansprüche, die mehrere Platzierungsvorsprünge (10, 13) aufweist, die vorzugsweise eben um die Umfangswand (3) platziert sind, wobei die Platzierungsvorsprünge (10, 13) vorzugsweise mit einer Brechverbindung (11) paarweise verbunden sind und/oder wobei die Platzierungsvorsprünge (10, 13) in gegenüberliegenden Richtungen vorzugsweise zu der Kontaktoberfläche der Umfangswand (3) an der Stelle der Brechverbindung (11) geneigt sind, wobei die Platzierungsvorsprünge (13) eines Paars vorzugsweise voneinander getrennt stehen.

12. Installationsdose (1) nach Anspruch 11, bei der ein Paar von Platzierungsvorsprüngen (13), das mit der Brechverbindung verbunden ist, im Wesentlichen einen V-förmigen Querschnitt aufweist und/oder bei der ein Paar von Platzierungsvorsprüngen (13), das mit der Brechverbindung (11) verbunden ist, zusammen mit der Brechverbindung (11) einen im Wesentlichen Y-förmigen Querschnitt aufweist.

13. Installationsdose (1) nach Anspruch 11 oder 12 mit einer gekrümmten herumgehenden Umfangswand (3), vorzugsweise einer kreisförmigen, bei der die Platzierungsvorsprünge (10, 13) Seitenränder (14) aufweisen, die weg von der Umfangswand (3) zeigen, und die, wenn die Dose (1) nicht platziert ist, einen größten umschriebenen Kreis der Installationsdose (1) definieren.

## Revendications

1. Boîte d'installation (1) à mettre en place dans un trou pratiqué dans un mur d'un bâtiment, comprenant une paroi inférieure (2), une paroi circonférentielle (3) dont un bord (8) limite une ouverture d'installation, et une saillie de placement (10) située à l'extérieur de la paroi circonférentielle pour une mise en prise avec une paroi de limitation du trou, **caractérisée en ce que** la saillie de placement (10) forme une unité avec la paroi circonférentielle (3) par l'intermédiaire d'un raccordement à casser (11) qui se situe au niveau d'une extrémité de la saillie de placement (10) qui est adjacente à la paroi circonférentielle (3).

2. Boîte d'installation (1) selon la revendication 1, dans laquelle la saillie de placement (10) s'étend le long de la paroi circonférentielle (3) transversale au plan de l'ouverture d'installation.

3. Boîte d'installation (1) selon la revendication 1 ou la revendication 2, dans laquelle, à partir du raccordement à casser (11), la saillie de placement (10) s'étend librement à partir de la paroi circonférentielle (3), dans laquelle, dans une direction en allant en s'éloignant du raccordement à casser (11), la distance libre entre la saillie de placement (10) et la paroi circonférentielle (3) augmente de préférence.

4. Boîte d'installation (1) selon l'une quelconque des revendications précédentes, dans laquelle la saillie de placement (10) est allongée, dans laquelle dans une direction longitudinale de la saillie de placement, la longueur du raccordement à casser (11) est plus courte que la longueur de la saillie de placement (10).

5. Boîte d'installation (1) selon l'une quelconque des revendications précédentes, dans laquelle, par rapport à la saillie de placement (10), le raccordement à casser (11) se situe au niveau du côté de l'ouverture d'installation.

6. Boîte d'installation (1) selon l'une quelconque des revendications précédentes, dans laquelle la saillie de placement (10) forme une lèvre à ressort dont une extrémité libre est mobile dans une direction transversale au plan de la paroi circonférentielle (3).

7. Boîte d'installation (1) selon l'une quelconque des revendications précédentes, dans laquelle la saillie de placement (10) comprend un bord de placement (14) qui fait face à la paroi circonférentielle (3) en allant en s'éloignant de celle-ci, pour une mise en butée contre la paroi de limitation, dans laquelle le bord de placement (14) change selon un angle dans un bord d'ancrage (16) décalé de la paroi circonférentielle (3), dans laquelle le bord de placement (14) change de préférence selon un angle aigu (18) dans le bord d'ancrage (16), et/ou dans laquelle une surface de verrouillage du bord d'ancrage (16) fait face de préférence à l'ouverture d'installation, et/ou dans laquelle, dans une direction longitudinale de la saillie de placement (10), le bord d'ancrage (16) se situe de préférence sur le côté du raccordement à casser (11), de préférence au niveau d'un bord d'extrémité du raccordement à casser (11), lequel bord fait face à l'ouverture en allant en s'éloignant de celle-ci.

8. Boîte d'installation (1) selon l'une quelconque des revendications précédentes, dans laquelle la saillie de placement (10) est inclinée par rapport à la surface de contact de la paroi circonférentielle (3) au niveau de l'emplacement du raccordement à casser (11).

9. Boîte d'installation (1) selon l'une quelconque des revendications précédentes, dans laquelle la saillie de placement (10) comprend un volet de placement (13) qui s'étend transversal au plan de l'ouverture d'installation.

10. Boîte d'installation (1) selon l'une quelconque des revendications précédentes, dans laquelle, au niveau d'une extrémité d'insertion, la saillie de placement (10) comprend un bord de départ (15) qui fait face à la paroi circonférentielle (3) en allant s'éloignant de celle-ci, le bord de départ (15) présentant une position inclinée par rapport à la paroi inférieure (2) et à la paroi circonférentielle (3).

11. Boîte d'installation (1) selon l'une quelconque des revendications précédentes, comprenant plusieurs saillies de placement (10, 13) placées de préférence de manière régulière autour de la paroi circonférentielle (3), dans laquelle les saillies de placement (10, 13) sont connectées de préférence à un raccordement à casser (11) par paires, et/ou dans laquelle, dans des directions opposées, les saillies de placement (10, 13) sont inclinées de préférence par rapport à la surface de contact de la paroi circonférentielle (3) au niveau de l'emplacement du raccordement à casser (11), dans laquelle les saillies de placement (13), à l'intérieur d'une paire, sont de préférence espacées l'une de l'autre.

12. Boîte d'installation (1) selon la revendication 11, dans laquelle une paire de saillies de placement (13) connectées au raccordement à casser, présente sensiblement une section transversale en forme de V, et/ou dans laquelle une paire de saillies de placement (13) connectées au raccordement à casser (11) avec le raccordement à casser (11), présente une section transversale sensiblement en forme de Y.

13. Boîte d'installation (1) selon la revendication 11 ou la revendication 12, comprenant une paroi circonférentielle incurvée en rond (3), de préférence circulaire, dans laquelle les saillies de placement (10, 13) présentent des bords latéraux (14) qui font face à la paroi circonférentielle (3) en allant en s'éloignant de celle-ci, et qui définissent, lorsque la boîte (1) n'est pas mise en place, un cercle circonscrit plus grand de la boîte d'installation (1).
